# EUROPEAN PATENT SPECIFICATION

(11) **EP 3 474 247 B1**
(45) Date of publication and mention of the grant of the patent: **07.04.2021**
(21) Application number: 17196844.9
(22) Date of filing: 17.10.2017
(51) Int. Cl.: G08B 13/196, G06F 21/62, G06F 21/60

(54) **MEDIA CONTENT PRIVACY CONTROL**
MEDIENINHALTDATENSCHUTZSTEUERUNG
COMMANDE DE CONFIDENTIALITÉ DE CONTENU MULTIMÉDIA

(43) Date of publication of application: 24.04.2019
(73) Proprietor: Nokia Technologies Oy, 02610 Espoo (FI)
(72) Inventor: MARTIN LÓPEZ, Enrique, Cambridge, CB4 3DN (GB); DESORBAY, Eric, 44750 Campbon (FR); PEREZ GARCIA, Pablo, 28050 Madrid (ES); PALYUTINA, Karina, Cambridge, CB4 2AW (GB); ROENNOW, Troels, Cambridge, CB2 9BG (GB)
(74) Representative: Laine IP Oy

(56) References cited:
- EP-A1- 3 226 165
- US-A1- 2014 152 815
- US-A1- 2017 076 572
- KENICHI YABUTA ET AL: "A New Concept of Security Camera Monitoring with Privacy Protection by Masking Moving Objects", 11 November 2005 (2005-11-11), ADVANCES IN MULTIMEDIA INFORMATION PROCESSING - PCM 2005 : 6TH PACIFIC-RIM CONFERENCE ON MULTIMEDIA, JEJU ISLAND, KOREA, NOVEMBER 13-16, 2005; PROCEEDINGS; [LECTURE NOTES IN COMPUTER SCIENCE ; 3767], SPRINGER, BERLIN, DE, PAGE(S) 831 - 842, XP019024020, ISBN: 978-3-540-30027-4 * Section 3 "Masking method" *

## Description

### FIELD

The present invention relates to media content privacy control, and in particular to controlling access to image and video media content.

### BACKGROUND

Personal media content, such as images and videos, is increasingly shared and distributed via various services, such as social media applications. Each platform, service or application typically has its own privacy control mechanism. A user can typically set users and groups of users to whom his/her personal content is available, e.g. a list of friends, except users x and y. The privacy control mechanisms may be oversimplified or cumbersome. The services typically update their policies, requiring constant attention or revision by the user.

Further, users often do not know if or how their personal media content can be used for other purposes, such as further analysed to offer personalized advertisements or develop computer-vision algorithms. Users often cannot control, or have very limited chances to control such usage of their personal media content. This is generally set by terms and conditions of the service, which in many cases are difficult to read and remember Previous approaches of partially sharing video data are known from documents US2017/076572A1, EP3226165A1, and KENICHI YABUTA ET AL: "A New Concept of Security Camera Monitoring with Privacy Protection by Masking Moving Objects" (ISBN: 978-3-540-30027-4). Document EP3226165A1 discloses controlling access to data with a distributed ledger.

### SUMMARY

The invention is defined by the features of the independent claims. Some specific embodiments are defined in the dependent claims.

According to a first aspect of the present invention, there is provided a method, comprising: generating, based on source media content, a media vector comprising one or more privacy-controlled components, wherein each component is a partially modified version of the source media content such that at least some different privacy-controlled visual media content parts of the source media content are removed, substituted or hidden at different privacy-controlled components, and assigning for each of the components privacy control information.

According to a second aspect of the present invention, there is provided a method, comprising: receiving, by a media content user apparatus privacy control information, wherein the privacy control information is associated with one or more privacy-controlled components of a media vector, each privacy-controlled component representing a partially modified version of associated source media content, and accessing at least one of the components of the media vector on the basis of the privacy control information.

According to a third aspect, there is provided an apparatus, comprising at least one processing core, at least one memory including computer program code, the at least one memory and the computer program code being configured to, with the at least one processing core, cause the apparatus at least to: generate, based on source media content, a media vector comprising one or more privacy-controlled components, wherein each component is a partially modified version of the source media content such that at least some different privacy-controlled visual media content parts of the source media content are removed, substituted or hidden at different privacy-controlled components, and assign for each of the components privacy control information.

According to a fourth aspect, there is provided an apparatus comprising at least one processing core, at least one memory including computer program code, the at least one memory and the computer program code being configured to, with the at least one processing core, cause the apparatus at least to: receive privacy control information, wherein the privacy control information is associated with one or more privacy-controlled components of a media vector, each privacy-controlled component representing a partially modified version of associated source media content, and access at least one of the components of the media vector on the basis of the privacy control information.

According to a fifth aspect, there is provided a computer program product or a non-transitory computer readable medium having stored thereon a set of computer readable instructions that, when executed by at least one processor, cause an apparatus to at least: generate, based on source media content, a media vector comprising one or more privacy-controlled components, wherein each component is a partially modified version of the source media content such that at least some different privacy-controlled visual media content parts of the source media content are removed, substituted or hidden at different privacy-controlled components, and assign for each of the components privacy control information.

According to a sixth aspect, there is provided a computer program product or a non-transitory computer readable medium having stored thereon a set of computer readable instructions that, when executed by at least one processor, cause an apparatus to at least: receive privacy control information, wherein the privacy control information is associated with one or more privacy-controlled components of a media vector, each privacy-controlled component representing a partially modified version of associated source media content, and access at least one of the components of the media vector on the basis of the privacy control information.

According to an embodiment, the privacy control information is provided to or received from a distributed ledger for controlling access to one or more of the components of the media vector.

According to an embodiment, the accessing at least one of the components comprises: sending a request for at least one of the components, receiving a signed token indicating at least one of the components that are allowed to be delivered to the media content user, sending the signed token to an entity storing and/or controlling access to the media vector, receiving the at least one of the components from the entity, and causing decoding of the at least one of the components or sending of the at least one of the components for a media player device.

### BRIEF DESCRIPTION OF THE DRAWINGS

FIGURES 1 and 2 illustrate methods in accordance with at least some embodiments of the present invention;
FIGURE 3 illustrates an example system capable of supporting at least some embodiments of the present invention;
FIGURE 4 illustrates a media vector in accordance with at least some embodiments of the present invention;
FIGURE 5 illustrates a privacy array in accordance with at least some embodiments of the present invention; and
FIGURE 6 illustrates privacy element components in accordance with at least some embodiments of the present invention;
FIGURE 7 illustrates a media vector in accordance with at least some embodiments of the present invention;
FIGURE 8 illustrates a method in accordance with at least some embodiments of the present invention; and
FIGURE 9 illustrates an apparatus in accordance with at least some embodiments of the present invention.

### EMBODIMENTS

There are now provided methods and apparatuses facilitating a user-centric, cross-platform and decentralized privacy control framework for personal media content, particularly for personal video and image content. Different versions of source media content are generated, such that each version or component may reveal a different level of privacy-controlled visual media content parts of the source media content. A media vector comprising different privacy controlled components may thus be generated, wherein each component may be assigned with specific privacy control information, which may form a privacy array. The privacy control information is stored and managed in a secure and trustworthy manner, in some embodiments by storing and transferring the media vector and the privacy array in encrypted and integrity-protected form for users owning the privacy control information and the media content and entities authorized to use the media content, such as users playing the media content. On the basis of the privacy control information, relevant media vectors may be provided to legitimate authenticated media content users, such as users' media players.

A distributed ledger may be applied for automatically controlling usage of user's media content by various service providers according to user's preferences. A distributed ledger can be considered a general database synchronized between many parties, which, at successive time instances, comprises successive states of consensus about a particular matter, here media content privacy control information. Such states may be reached by the many parties, typically nodes in a peer-to-peer (P2P) network, following a decentralized consensus algorithm. In general, this provides an agreement between the nodes without assuming trust between them. Different service providers may oversee in the distributed ledger that every participant handling personal media content is playing by the rules set by the user.

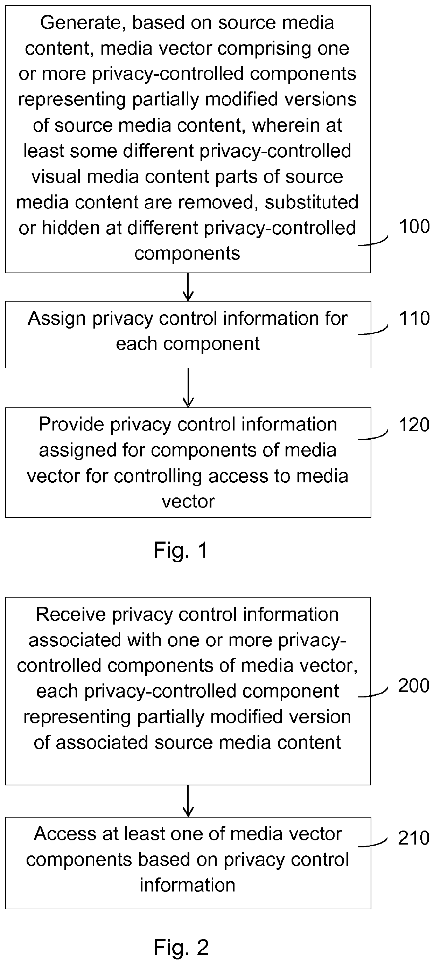

FIGURE 1 illustrates a method according to some embodiments. The method may be implemented in an apparatus generating privacy control information, such as a media owner, a media producer, or a rights controller apparatus, e.g. a user device or service provider device.

A media vector comprising one or more privacy-controlled components is generated 100 based on source media content. The media vector refers generally to a collection of at least the privacy-controlled components and may be structured in various forms. Each privacy-controlled component is a partially modified version of the source media content. Privacy control information is assigned 110 for each of the components. The privacy control information is provided 120 or stored for controlling access to one or more of the components of the media vector. The privacy control information may thus be sent for storage in encrypted form to a database for controlling access to one or more of the components of the media vector. In some embodiments, the privacy control information is sent 120 to a distributed ledger. However, although references are made below particularly to use of distributed ledger, it is to be appreciated that the privacy control information may be made available for media content users in various other ways, such as sending the privacy control information, possibly with the media vector, to a further device controlling access to the media vector. Such system may comprise one more databases and security leveraging certification entities, mutual authentication between parties, transaction and content encryption.

FIGURE 2 illustrates a method according to some embodiments. The method may be implemented in a media content user apparatus, which may be an apparatus using the privacy control information, such as a media content distributor, a media content modifier, a media content analyser, media content receiver/player, or rights controller apparatus, e.g. a user device or a service provider device.

A media content user apparatus receives 200 privacy control information which in some embodiments is stored in a distributed ledger. The privacy control information is associated with one or more privacy-controlled components of a media vector, each privacy-controlled component representing a partially modified version of associated source media content. The components may provide different levels of privacy-controlled visual media content parts of the source media content for presentation and each component may be assigned with specific privacy control information. At least one of the components of the media vector is accessed 210 on the basis of the privacy control information.

The present features facilitate to achieve a multi-level, user-centric, and automatic way of dealing with privacy and usage of personal media content, such as images and video. Personal media content may thus be post-processed to produce 100 a media vector with a number of different privacy-controlled components. The privacy-controlled components of the media vector can be understood as different copies of the visual media content in which different elements are removed or substituted, e.g. substituting people with black silhouettes. The privacy control information assigned 110 for each component of the media vector may comprise privacy-related information and instructions that may also be referred to as a privacy array. Privacy arrays may be stored 120 in the distributed ledger or other suitable storage for access 200 by service providers that make use of personal visual content to automatically display it differently depending on applied privacy context.

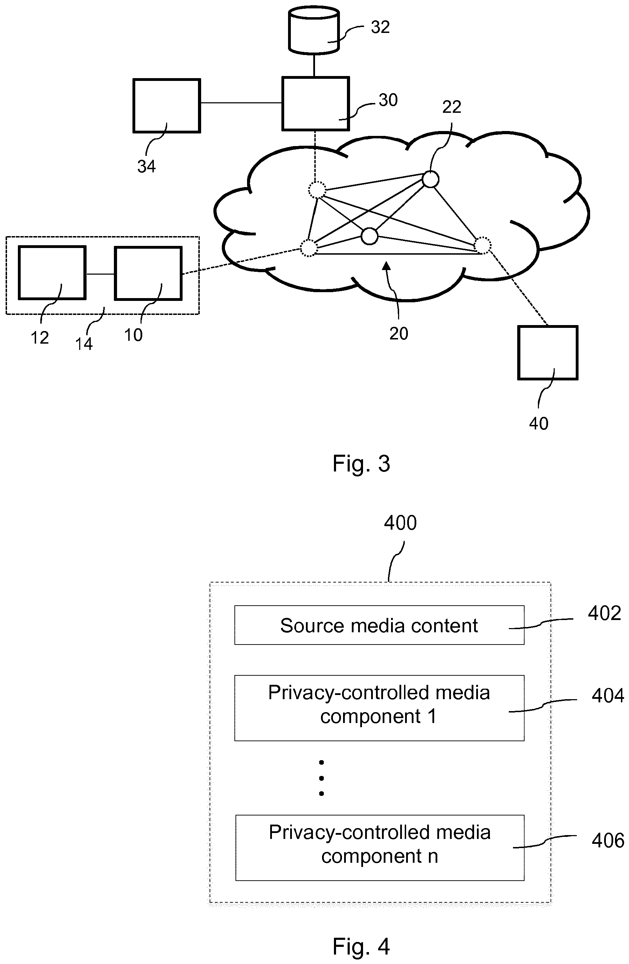

FIGURE 3 illustrates an example system in accordance with at least some embodiments of the present invention. A media source 12 may provide media content for a privacy controller 10. The privacy controller 10 may generate the media vector and privacy controller and carry out features illustrated in connection of Figure 1. The privacy controller 10 and the media source 12 may be separate devices or provided in a single device 14, which may be referred to as content providing apparatus (CPA). For example, a user device generating media content may operate as a CPA. For conciseness, in the following examples references are made to the CPA 14, but it is to be appreciated that the privacy controller 10 as separate device from the media source may be the operating entity instead of the CPA 14 at least in some embodiments.

The CPA 14 may be connected to a distributed network 20. The distributed network may comprise a number of nodes 22. The CPA 14 may operate as a node in the network 20, or the CPA 14 may connect a node on the network 20 so that the latter operates on its behalf.

The privacy control information may be stored in a distributed ledger stored at least in part of nodes 22 of the distributed network 20. A media content user apparatus 30, which may be also referred to as a content receiving apparatus (CRA), may receive the privacy control information stored in the distributed ledger and carry out the features illustrated in connection with Figure 2. The privacy control information may be received 200 from the distributed ledger stored in the apparatus 30 or from a node 22 of the distributed network 20.

The media vector may be stored in a media content storage 32, such as a media server connected by the CRA 30. The CRA may directly further use the media content according to the privacy control information, such as display image content by a user device or analyze or modify the media content. In some embodiments, the CRA is an intermediate device and provides at least part of the media content, according to the privacy control information, to further device(s) 34. For example, the CRA may be a media content service provider server receiving requests from user devices and providing allowed media content components to authorized requesting user devices. There may be also other devices 40 capable of at least accessing the distributed ledger.

The devices 10, 12, 14, 30, 34, 40 may comprise corporate, authority, and/or user devices, such as a server, a desktop/tablet/laptop computer, smartphone, set-top box or other suitable electronic device. The system may comprise an administrator or management node, a hub, relay or other kind of intermediate device (not shown) for connecting a node to further networks or services, such as another distributed or centralized computing system or a cloud service. The nodes are mutually addressable in a suitable way, for example, they may be connected to an internet protocol, IP, network. Messages released into the IP network with a recipient address are routed by the network to the recipient node identified by the recipient address. IP is not the only suitable networking technology used, for example, other peer-to-peer networking models are also suitable.

In some embodiments, the distributed network 20 is a blockchain network and the nodes 14, 22, 30, 40 operate as blockchain (BC) nodes and store local blockchain database. The distributed ledger is a blockchain ledger and the privacy control information is provided 120 to the blockchain ledger in response to validation of a blockchain transaction comprising the assigned privacy control information.

Blockchain state information shared by the nodes may store all the transactions and history carried out in the network 20, also regarding the privacy control information of media vector components. The blockchain state information is stored in or as the blockchain ledger. Each node may comprise the ledger whose content is in sync with other ledgers. The nodes may validate and commit transactions in order to reach consensus. Each node may have their own copy of the ledger which is in some embodiments permission-controlled, so participants see only appropriate transactions.

Changes in resource ownership in the blockchain 20 take the form of blockchain transactions secured by strong cryptography. A blockchain transaction may comprise an identifier of a new owner, that is the recipient, of the resource, together with a cryptographic signature of the previous owner, that is the sender, such that malicious attackers cannot re-assign resources they do not own. Application of blockchain technology and the ledger enable a way to track the unique history of transactions by the individual nodes in the network.

The CPA 14 may provide 120 signed blockchain transactions to the blockchain ledger whenever it generates privacy control information. To establish a next block, the transactions are broadcast into the blockchain network. Broadcasting here refers to a dissemination method suitable for the context, which will cause the transactions to be communicated to the nodes of the network in general. Reaching each and every node with each and every transaction is not strictly necessary.

A node establishing the next block may be known as a miner node. A miner node may compile a set of transactions, which it receives from the broadcasts, for the next block, and search for a proof-of-work code that covers all the transactions in the set of transactions for the next block. For example, the proof-of-work code may be a numerical value, with which the contents of the next block, that is, the set of transactions, hashes to a value that is less than a threshold. More generally, there may be a target area of an output space of a hash function, wherein the target space need not be in the low end of the target space. The smaller the target area is, the more difficult it is to discover the proof-of-work. Once a miner discovers the proof-of-work, it can publish the block, which other nodes of the system will then add to the block chain as the new most recent established block.

In case the miner node discovers a proof-or-work based on an incomplete set of transactions, for example if some transactions did not reach the miner node, other nodes in the network will not accept the block into the blockchain, and it will be excluded from a consensus version of the blockchain in the system.

Since an output of a hash function is a pseudorandom function of the input, the set of transactions, hashed by itself, produces a hash value that is essentially randomly placed in the output space of the hash function. The set of transactions may be completely or representatively used as input to the hash function. Modifying the input with a candidate proof-of-work code, which may be known as a nonce, will produce a new hash value, which again is essentially randomly placed in the output space of the hash function. The modification may be as slight as a single bit. Therefore, searching for the correct proof-of-work code, which satisfies a pre-agreed criterion concerning its location in the output space of the hash function, requires repeatedly deriving a hash value with a different candidate proof-of-work code modifying the input to the hash function. Once a proof-of-work code that, with the transactions, produces a hash value in the target area of the output space of the hash function is found, the block is ready. A completed block may be distributed to the system to establish it in the blockchain. Although discussed above in terms of proof-of-work, in some embodiments a proof-of-stake may be used instead of, or additionally to, a proof-of-work. In a proof-of-stake based system, a new block is accepted once a sufficient fraction of resources are proven as owned by nodes ready to accept the new block version.

Once a new block is established, the blockchain becomes longer. A transaction is considered the more reliable, the larger the number of blocks established since the block where the transaction is comprised. This is since transactions are hashed into the chain of blocks, and discrepancies in the block chain are resolved as the block chain gets longer. In each next block in the sequence, a hash of the previous block may be included along with the transactions, attaching the blocks to each other to form the chain. Hashes linking the blocks together to form a chain may be referred to as Merkle hashes. Maliciously modifying a transaction in a block far down the chain would involve re-doing the work of finding proofs for all subsequent blocks, since the input to the hash function for the block comprising the transaction would be changed, causing the resulting hash value, with the proof in that block, to no longer be disposed in the desired area in the output space of the hash function.

With reference to FIGURE 4, a media vector 400 may comprise the source media content 402 and a plurality of privacy-controlled media components 404, 406 as layers. Among the privacy-controlled media components 404, 406, an anonymized base layer (ABL) may comprise no privacy-sensitive elements, and further privacy-controlled layer(s) may comprise one or more privacy-sensitive elements.

At least some different privacy-controlled visual media content parts of the source media content 402 may be removed, substituted or hidden at different privacy-controlled components 404, 406. In some embodiments, the source media content comprises image data. The image data is thus analysed for detecting privacy-sensitive image elements. Regions of image data comprising privacy-sensitive elements are classified and assigned privacy levels according to content owner's preferences. Privacy-sensitive image elements are included or avoided in the privacy-controlled components on the basis of the assigned privacy levels.

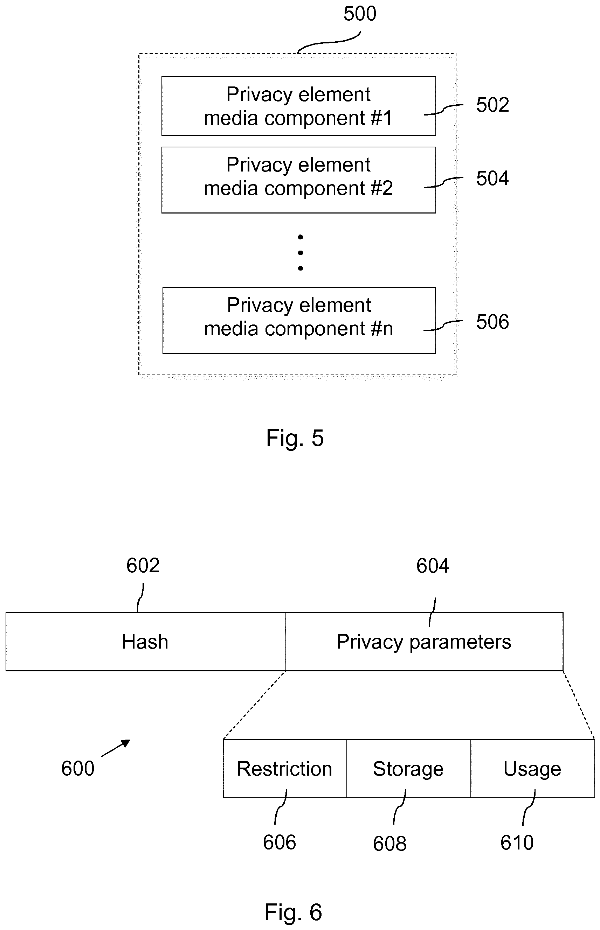

In some embodiments, the privacy control information for each of the components in the media vector 400 is stored in a privacy array. FIGURE 5 illustrates an example of a privacy array 500. The privacy array comprises an entry 502, 504, 506 for each privacy-controlled component 402, 404, 406 in vector 400, respectively, and may also comprise an entry for the source media content.

As illustrated in FIGURE 6, a privacy array entry 600 may comprise a hash 602 of associated media content and one or more privacy parameter elements 604. In some embodiments, there may be parameters on at least one of restriction 606, which may identify entities that are allowed to play or otherwise output the content, storage 608, which may identify entities that are allowed to store the content (e.g. cloud services), and usage of media content, which may identify entities that are allowed to process the content for different purposes.

A blockchain transaction comprising the privacy control information, such as the privacy array 600, may be a public transaction. Such transaction record comprises the privacy control information and a hash pointer to previous block of the chain. The record may comprise also further information element(s), such as timestamp.

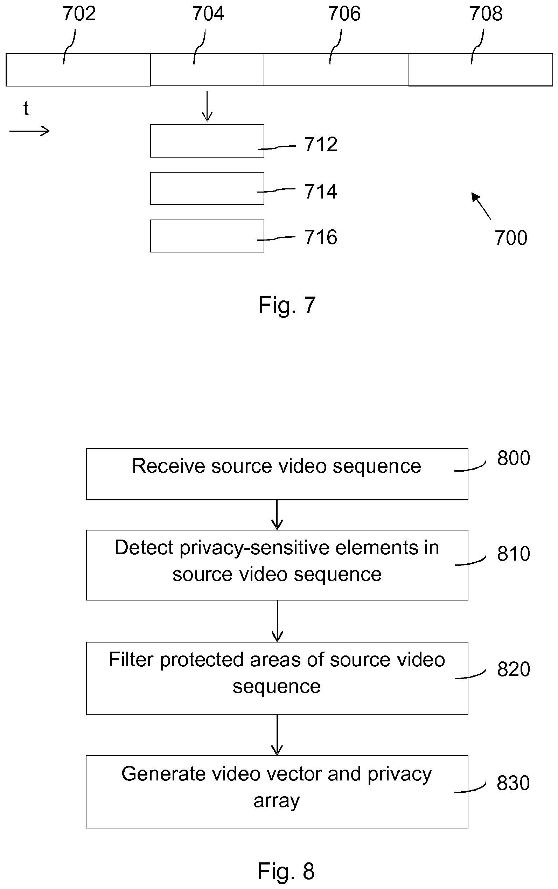

FIGURE 7 illustrates a simplified example of a video media vector 700, which is an example embodiment of the media vector 400. The source video sequence is segmented into a set of sequential components 702, 704, 706, 708. Components 702, 706 and 708 comprise video sequence portions that have no privacy-sensitive elements. Component 704 comprises privacy-sensitive elements and the media vector 700 comprises a set of privacy-controlled components 712, 714, 716 parallel to the component 704. The privacy-controlled components 712-716 comprise different level of privacy-sensitive elements. For example, component 712 may form the ABL without any privacy-sensitive elements and may be assigned privacy level 'public', whereas component 714 may reveal adults but no infants. Different components may accommodate e.g. a silhouette or a community avatar instead of an image of a person. Person's faces may be removed or blurred, or even in a zero case a component may be empty of content.

FIGURE 8 illustrates processing of a source video sequence to a media vector, in this case video vector, according to some embodiments. The method may be applied in the CRD 14 and at least some of the blocks 800 to 830 may be specific modules, as further referred to below.

The detection 810 and tracking of privacy-sensitive elements in a received 800 source video sequence may be carried out by a specific module, which can be automatic or semi-automatic. The aim of this module is detecting and classifying regions of the image that contain sensitive elements, e.g. faces of users, or private home contents. This can be done using an image recognition technology, in some embodiments based on deep convolutional neural networks.

In some embodiments, a list of such privacy-sensitive elements pre-defines target labels for the image recognition algorithms and default sensitivity. For example, such list may define:

```
                       {"sensitiveInfoTargets": {
                           "items": [
                             {"label": "infants"
                               "sensitivity": "high"},
                             {"label": "adults"
                               "sensitivity": "medium"
                             {"label": "privatelndoors"
                                sensitivity": "medium"}
                       ]}} "
```

The output of this first module may include the source video sequence and a sequence of bounding silhouettes identifying the privacy-sensitive elements in each video frame and their positions.

A second module may receive the output above as input and automatically decide 820 which areas of the image need to be protected. This may be performed based on the location of recording and/or according to user's privacy preferences, for example. For example, the user may have decided to protect only some people, only children, etc. In the preferred embodiment a predefined set of features will be protected, defining a hierarchy of privacy levels.

The output of the second module may be the source video sequence, the sequence of silhouettes that need to be protected, and their assigned privacy levels. For example, the sensitive content may be defined as follows:

```
                       {"sensitiveContent": {
                           "items": [
                             {"silhouetteSequenceID": "001"
                               "label": "adults"
                               "location": "public"
                               "privacyLevel": "2"},
                             {"silhouetteSequenceID": "002"
                               "label": "infants"
                               "location": "private"
                           ]}} "privacyLevel": "4"}
```

Finally, a third module may generate 830 the video vector and privacy array. According to an example embodiment, this may be performed by the following steps 1-4:
**1.** Time segmentation. It segments the video in periods with common privacy properties. This allows to produce a single version of the video in parts where there are no privacy concerns (e.g. there are no people in the screen for a while), and personalized versions for parts where there are privacy concerns. A first coarse approach, without loss of generality, would be considering a single time period covering the whole video. In any case, for each period, the following process may be applied:
**2.** Generation of the ABL, which can be thought of as the video sequence without any elements of the sensitive content list. This may be the first component of the video vector.
**3.** Generation of increasingly revealing layers, each of them becoming parallel component of the video vector. For example, this may involve using:
   i. An enhancement layer to add the extra information to the ABL of the video content, using e.g. Scalable Video Coding (SVC). This may comprise, for instance, black silhouettes instead of sensitive content elements. It may also be a coded layer with the difference between the full video (original sequence) and the anonymized video content. In the latter case, the decoding of the base and enhanced layers provides a result which is visually equal to the original sequence. To allow a finer granularity, it is possible to generate different layers for different sensitive elements of the video. For instance, if a video sequence shows an adult and a child, one enhancement layer is generated for each of them.
   ii. A vector image containing avatars of the users,
   iii. A full non-anonymized version of the video (original sequence) can be the last element of the video vector.

   If the content is to be delivered over the internet, versions of steps 2 and 3 can be generated at different resolutions and bit rates, for their use in HTTP Adaptive Streaming protocols.
**4.** Generation of the privacy array, which may be performed as further illustrated below.

As illustrated in connection with Figures 4, 5 and 6, the privacy array may contain a number of rows 502, 504, 506 equal to the number of components 402, 404, 406 of the multimedia vector. The first element of each row may be the hash 602 of the corresponding component of the multimedia vector, and the subsequent elements 604 of the row encode privacy instructions, such as the circumstances under which each component can be displayed, restrictions on where they can be stored (e.g. different cloud services), or restrictions on the usage of the content for analytics (e.g. only to be used by the police for public safety investigations). An example of such privacy array:

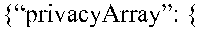

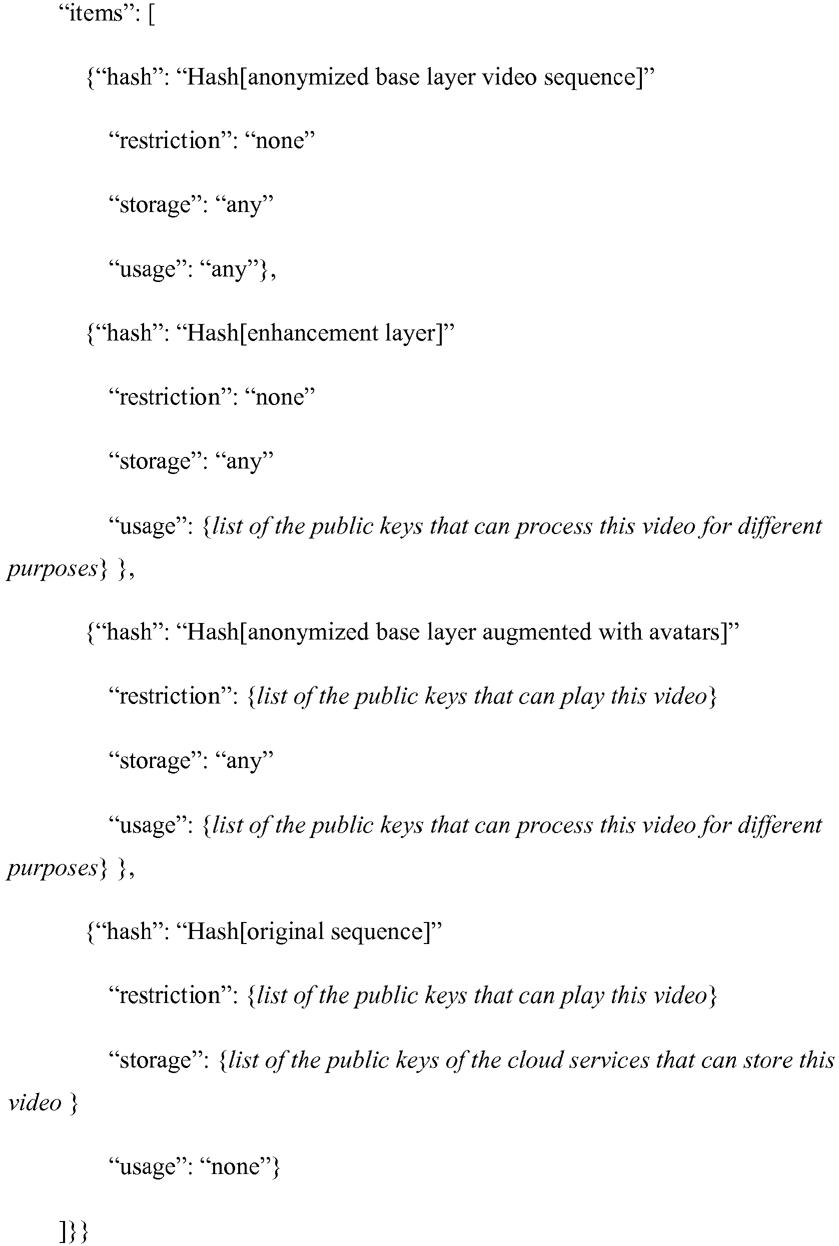

The privacy array may be stored in the distributed ledger and uniquely linked to the original source video sequence by the "Hash[original sequence]" (first element of the last row of the privacy array). Moreover, it can be found by using the hash of the least sensitive version of the video "Hash[anonymized base layer video sequence]", which may be commonly shared.

The detection, filtering and privacy array generating modules can be owned by the private user themselves, or run as part of a third-party cloud service.

The distributed ledger offers a decentralized, auditable, and tamper-proof registry of privacy permissions. In some embodiments, the miner nodes run a distributed ledger client together with a video player application. This may include private users as well as service providers, such as social media service providers or video sharing service providers, which provide video playback through applets embedded on their apps or websites. However, a "lite" version of the video player can have the same functionality in terms of only reproducing video according to the agreed privacy settings and not participate in the consensus algorithm of the distributed ledger.

A smart contract may be applied to control access to the media vector on the basis of the assigned privacy control information. The smart contract may issue tokens for verified media content requesting entities, each token indicating media components allowed to be provided to a media content requesting entity.

Step 210 may comprise sending a request for media vector component(s) to the distributed ledger. A signed token may be received, indicating at least one of the components that are allowed to be delivered to the media content user. The signed token may be sent to an entity storing and/or controlling access to the media vector, such as an entity controlling the storage 32. Allowed component(s) are received from the entity and they may be decoded for playback or sent to another device 34, such as for a media player application of a requesting user device.

A request for media vector components and/or a message to the entity comprising the signed token may be signed with a private key associated with the media content user.

The signature may be retrieved from memory or generated for the document by a secret key associated to the signing apparatus. The secret key may be a device-specific secret key, or in some embodiments a private cryptography key of an authorized user provided to the apparatus, for example. Each device may be provided with a public-private key pair at manufacture. The private key resides on the certifying device's secured element, such that it cannot be tampered with and the private key cannot be stolen. Moreover, the secure element also holds the hashing and signing logic.

Sensitive media content that may be stored in a third-party cloud or other service may be encrypted with the owner's secret key, such that no one can access it unless explicit permission is given by the user. The media vector component(s) may be received 200 in encrypted form and decrypted with a private key associated with the media content user. To share media content, the owner may decrypt the data and re-encrypt it with the recipient's public key. This it can be ensured that the privacy settings cannot be disobeyed accidentally. An example process of video encryption and decryption will be further explained below.

A potential embodiment for the playout is using MPEG Dynamic Adaptive Streaming over HTTP (DASH) as video distribution format. Thus, each video period with common privacy settings may be signalled as a DASH period. In each DASH period, there will be as many video Adaptation Sets as privacy options, e.g. one for anonymous content, one for friends, one for game buddies, etc.

The Adaptation Set may contain all content elements or representations required by a recipient to play the video according to the corresponding privacy settings and information required to decrypt the video content.

All representations are encrypted with the recipient's public key, except for the ABL. Alternatively, each Representation can be encrypted with an individual random key, which may be common for all recipients and referred to as a Content Key. The Content Keys may be encrypted with the recipient's public key using, for instance, MPEG Common Encryption (CENC) protocol.

The information required to decrypt the video content may be stored in a third party server. In an embodiment, the following procedure is applied for accessing encrypted media vector:
1. When a recipient, such as a user CRA 30, requests to see any non-anonymized version of a video, a video player app of the recipient device may retrieve the plain ABL and calculate a hash of the ABL.
2. The video player locates the corresponding transaction on the distributed ledger, which contains the privacy array and sends a request for non-anonymized content to the smart contract. This request is signed with the private key of the recipient.
3. A BC smart contract controlling access to the media vector verifies the signature and upon verification responds with a signed token that includes the components of the video vector that can be delivered to the recipient's player app.
4. The video player sends the signed token, to a service where the encrypted Representations are stored, such as the storage 32. This request is again signed with the private key of the recipient. The service verifies the request and delivers the requested encrypted Representations.
5. The video player decrypts and decodes the received Representations using the recipient's private key. Extensions of MPEG-DASH standard may be defined to fully ensure support this technology in an inter-operable way.

In an alternative embodiment, the video vector may be stored as unencrypted in a private server of the video producer or owner. In such case the protocol would be similar, except for step 4, which may be replaced by:
4. The video player sends the signed token, to the private server of the video producer, where the plain Representations are stored. This request is again signed with the private key of the user. The service verifies the request, does the encryption with the public key of the recipient, and delivers to him.

In some embodiments there may be also other roles than a content (and privacy control information) provider 14 and a content (and privacy control information) user or receiver 30, 34. There may be third parties 40 that may be able to modify at least some portion of the privacy control information. In some embodiments, an entity, such as a user, product or company, is tagged in the media content and may thus become a media content participant or associated entity. Thus, such entity or the tagged entity's authorized representative may be able to modify specific control information regarding the entity. For example, a video participant may change associated privacy control information such that a media component comprising an image of the video participant is set as non-public. Further data structures may be included in the privacy array for such further purposes. Public keys of video participants may be included in the distributed ledger (smart contract) code so that they can emit specific transactions for removing their corresponding images.

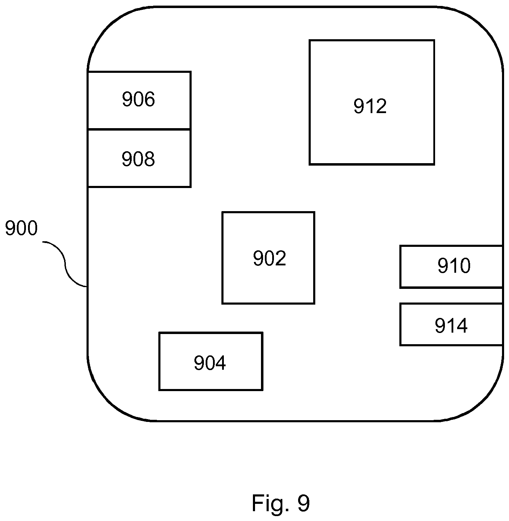

FIGURE 9 illustrates an example apparatus capable of supporting at least some embodiments of the present invention. Illustrated is a device 900, which may comprise a communications device arranged to operate as a node in a blockchain-based system. The device may be arranged to carry out at least some of the embodiments related to generating and/or using the media vectors and associated privacy control information as illustrated above. The device may include one or more controllers configured to carry out operations in accordance with at least some of the embodiments illustrated above, such as some or more of the steps illustrated above in connection with Figures 1 to 8. The device may operate as the CRA 14 or CRD 30.

Comprised in the device 900 is a processor 902, which may comprise, for example, a single- or multi-core processor wherein a single-core processor comprises one processing core and a multi-core processor comprises more than one processing core. The processor 902 may comprise more than one processor. The processor may comprise at least one application-specific integrated circuit, ASIC. The processor may comprise at least one field-programmable gate array, FPGA. The processor may be means for performing method steps in the device. The processor may be configured, at least in part by computer instructions, to perform actions.

The device 900 may comprise memory 904. The memory may comprise random-access memory and/or permanent memory. The memory may comprise at least one RAM chip. The memory may comprise solid-state, magnetic, optical and/or holographic memory, for example. The memory may be at least in part accessible to the processor 902. The memory may be at least in part comprised in the processor 902. The memory 904 may be means for storing information. The memory may comprise computer instructions that the processor is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The memory may be at least in part comprised in the processor. The memory may be at least in part external to the device 900 but accessible to the device. For example, control parameters affecting operations related to the generation and/or application of media vector and associated privacy control information may be stored in one or more portions of the memory and used to control operation of the apparatus. Further, the memory may comprise device-specific cryptographic information, such as secret and public key of the device 900.

The device 900 may comprise a transmitter 906. The device may comprise a receiver 908. The transmitter and the receiver may be configured to transmit and receive, respectively, information in accordance with at least one wired or wireless, cellular or non-cellular standard. The transmitter may comprise more than one transmitter. The receiver may comprise more than one receiver. The transmitter and/or receiver may be configured to operate in accordance with global system for mobile communication, GSM, wideband code division multiple access, WCDMA, long term evolution, LTE, IS-95, wireless local area network, WLAN, Ethernet and/or worldwide interoperability for microwave access, WiMAX, standards, for example. The device 900 may comprise a near-field communication, NFC, transceiver 910. The NFC transceiver may support at least one NFC technology, such as NFC, Bluetooth, Wibree or similar technologies.

The device 900 may comprise user interface, UI, 912. The UI may comprise at least one of a display, a keyboard, a touchscreen, a vibrator arranged to signal to a user by causing the device to vibrate, a speaker and a microphone. A user may be able to operate the device via the UI, for example to accept incoming telephone calls, to originate telephone calls or video calls, to browse the Internet, to manage digital files stored in the memory 904 or on a cloud accessible via the transmitter 906 and the receiver 908, or via the NFC transceiver 910, and/or to play games.

The device 900 may comprise or be arranged to accept a user identity module or other type of memory module 914. The user identity module may comprise, for example, a subscriber identity module, SIM, and/or a personal identification IC card installable in the device 900. The user identity module 914 may comprise information identifying a subscription of a user of device 900. The user identity module 914 may comprise cryptographic information usable to verify the identity of a user of device 900 and/or to facilitate encryption and decryption of communication effected via the device 900, such as the private and/or public keys as illustrated above.

The processor 902 may be furnished with a transmitter arranged to output information from the processor, via electrical leads internal to the device 900, to other devices comprised in the device. Such a transmitter may comprise a serial bus transmitter arranged to, for example, output information via at least one electrical lead to memory 904 for storage therein. Alternatively to a serial bus, the transmitter may comprise a parallel bus transmitter. Likewise the processor may comprise a receiver arranged to receive information in the processor, via electrical leads internal to the device 900, from other devices comprised in the device 900. Such a receiver may comprise a serial bus receiver arranged to, for example, receive information via at least one electrical lead from the receiver 908 for processing in the processor. Alternatively to a serial bus, the receiver may comprise a parallel bus receiver.

The device 900 may comprise further devices not illustrated in Figure 9. For example, the device may comprise at least one digital camera. Some devices may comprise a back-facing camera and a front-facing camera. The device may comprise a fingerprint sensor arranged to authenticate, at least in part, a user of the device. In some embodiments, the device lacks at least one device described above. For example, some devices may lack the NFC transceiver 910 and/or the user identity module 914.

The processor 902, the memory 904, the transmitter 906, the receiver 908, the NFC transceiver 910, the UI 912 and/or the user identity module 914 may be interconnected by electrical leads internal to the device 900 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

References throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. The skilled person will appreciate that above-illustrated embodiments may be combined in various ways. Embodiments illustrated in connection with Figures 2 to 8 may be taken in isolation or further combined together.

Various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in communications.

### ACRONYMS LIST

- ASIC: Application-specific integrated circuit
- CPA: Content providing apparatus
- CRA: Content receiving apparatus
- DASH: Dynamic Adaptive Streaming over HTTP
- FPGA: Field-programmable gate array
- GSM: Global system for mobile communication
- IC: Integrated Circuit
- LTE: Long term evolution
- MPEG: Moving Picture Experts Group
- NFC: Near-field communication
- PoS: Proof-of-stake
- PoW: Proof-of-work
- SVC: Scalable Video Coding
- UI: User interface
- WCDMA: Wideband code division multiple access,
- WiMAX: Worldwide interoperability for microwave access
- WLAN: Wireless local area network

## Claims

1. A method, comprising:
- generating, based on source media content, a media vector comprising privacy-controlled components, wherein each component is a partially modified version of the source media content such that at least some different privacy-controlled visual media content parts of the source media content are removed, substituted or hidden at different privacy-controlled components,
- assigning for each of the components privacy control information to provide different levels of privacy-controlled visual media content parts of the source media content for presentation, and
- causing the privacy control information to be stored in a distributed ledger for controlling access to different components of the media vector and determining at least one of the components of the media vector allowed to be provided to a media content user.

2. The method of claim 1, wherein the privacy control information is sent for storage in encrypted form to a database for controlling access to one or more of the components of the media vector.

3. The method of any preceding claim, wherein the source media content comprises image data,
the image data is analysed for detecting privacy-sensitive elements,
regions of image data comprising privacy-sensitive elements are classified and assigned privacy levels according to content owner's preferences, and
privacy-sensitive elements are included or avoided in the privacy-controlled components on the basis of the assigned privacy levels.

4. A method, comprising:
- receiving, by a media content user apparatus, privacy control information stored in a distributed ledger, wherein the privacy control information is associated with one or more privacy-controlled components of a media vector to provide different levels of privacy-controlled visual media content parts of source media content for presentation, each privacy-controlled component representing a partially modified version of associated source media content such that at least some different privacy-controlled visual media content parts of the source media content are removed, substituted or hidden at different privacy-controlled components, and
- accessing at least one of the components of the media vector on the basis of the privacy control information applied for determining at least one of the components of the media vector allowed to be provided to a media content user.

5. The method of claim 4, wherein the accessing at least one of the components comprises:
- sending a request for at least one of the components,
- receiving a signed token indicating at least one of the components that are allowed to be delivered to the media content user,
- sending the signed token to an entity storing and/or controlling access to the media vector,
- receiving the at least one of the components from the entity, and
- causing decoding of the at least one of the components or sending of the at least one of the components for a media player device.

6. The method of claim 4 or 5, wherein the request for at least one of the components and/or a message to the entity comprising the signed token are signed with a private key associated with the media content user, and/or
the at least one of the components of the media vector are received in encrypted form and decrypted with a private key associated with the media content user.

7. The method of any preceding claim, wherein the privacy control information is stored in a blockchain ledger in response to validation of a blockchain transaction comprising the assigned privacy control information.

8. The method of any preceding claim, wherein a smart contract controls access to the media vector on the basis of the assigned privacy control information and issues tokens for verified media content requesting entities, each token indicating media components allowed to be provided to a media content requesting entity.

9. The method of any preceding claim, wherein the media vector comprises the source media content and a plurality of privacy-controlled components as layers, wherein an anonymized base layer comprises no privacy-sensitive elements, and at least one further privacy-controlled layer comprising one or more privacy-sensitive elements.

10. The method according to any preceding claim, wherein the privacy control information for each of the components is stored in a privacy array, wherein the privacy array comprises an entry for each component and the source media content, the entry comprising a hash of associated media content and one or more privacy parameter portions comprising parameters on at least one of restriction, storing, and usage of media content.

11. An apparatus (10) comprising:
- means for generating, based on source media content, a media vector comprising privacy-controlled components, wherein each component is a partially modified version of the source media content such that at least some different privacy-controlled visual media content parts of the source media content are removed, substituted or hidden at different privacy-controlled components,
- means for assigning for each of the components privacy control information to provide different levels of privacy-controlled visual media content parts of the source media content for presentation, and
- means for causing the privacy control information to be stored in a distributed ledger for controlling access to different components of the media vector and determining at least one of the components of the media vector allowed to be provided to a media content user.

12. The apparatus of claim 11, wherein the apparatus comprises means for carrying out the method according to any one of claims 2, 3 or 7 to 10.

13. An apparatus (30) comprising:
- means for receiving, by a media content user apparatus privacy control information stored in a distributed ledger, wherein the privacy control information is associated with one or more privacy-controlled components of a media vector to provide different levels of privacy-controlled visual media content parts of source media content for presentation, each privacy-controlled component representing a partially modified version of associated source media content such that at least some different privacy-controlled visual media content parts of the source media content are removed, substituted or hidden at different privacy-controlled components, and
- means for accessing at least one of the components of the media vector on the basis of the privacy control information applied for determining at least one of the components of the media vector that are allowed to be provided to a media content user.

14. The apparatus of claim 13, wherein the apparatus comprises means for carrying out the method according to any one of claims 5 to 10.

15. A computer program comprising a set of computer readable instructions that, when executed by at least one processor, cause an apparatus to perform the method of any one of claims 1 to 10.

## Patentansprüche

1. Ein Verfahren mit:
- Generieren, auf der Grundlage von Quellmedieninhalten, eines Medienvektors mit datenschutzgesteuerten Komponenten, wobei jede Komponente einer teilweise modifizierten Version der Quellmedieninhalte entspricht, sodass mindestens einige unterschiedliche datenschutzgesteuerte Bildmedieninhaltsteile der Quellmedieninhalte an verschiedenen datenschutzgesteuerten Komponenten entfernt, ersetzt oder ausgeblendet werden,
- Zuordnen von Datenschutz-Steuerungsinformationen zu jeder Komponente, um unterschiedliche Stufen von datenschutzgesteuerten Bildmedieninhaltsteilen der Quellmedieninhalte für Präsentationszwecke zu erhalten, und
- Bewirken, dass die Datenschutz-Steuerungsinformationen in einem Distributed Ledger gespeichert werden, um den Zugriff auf verschiedene Komponenten des Medienvektors zu steuern und mindestens eine der Komponenten des Medienvektors festzulegen, die einem Benutzer von Medieninhalten bereitgestellt werden dürfen.

2. Das Verfahren nach Anspruch 1, wobei die Datenschutz-Steuerungsinformationen zum Speichern in verschlüsselter Form an eine Datenbank gesendet werden, um den Zugriff auf eine oder mehrere Komponenten des Medienvektors zu steuern.

3. Das Verfahren nach einem beliebigen der vorstehenden Ansprüche, wobei die Quellmedieninhalte Bilddaten umfassen,
die Bilddaten analysiert werden, um datenschutzsensible Elemente zu erfassen,
Bilddatenbereiche mit datenschutzsensiblen Elementen klassifiziert werden und diesen Bereichen Datenschutzstufen je nach Präferenzen des Inhaltsbesitzers zugeordnet werden, und
datenschutzsensible Elemente in den datenschutzgesteuerten Komponenten auf der Grundlage von zugeordneten Datenschutzstufen enthalten oder ausgeschlossen sind.

4. Ein Verfahren mit:
- Empfangen, durch ein Medieninhalts-Benutzergerät, von Datenschutz-Steuerungsinformationen, die in einem Distributed Ledger gespeichert sind, wobei die Datenschutz-Steuerungsinformationen mit einer oder mehreren datenschutzgesteuerten Komponenten eines Medienvektors assoziiert sind, um unterschiedliche Stufen von datenschutzgesteuerten Bildmedieninhaltsteilen von Quellmedieninhalten für Präsentationszwecke bereitzustellen, wobei jede datenschutzgesteuerte Komponente eine teilweise modifizierte Version der assoziierten Quellmedieninhalte darstellt, sodass mindestens einige unterschiedliche datenschutzgesteuerte Bildmedieninhaltsteile der Quellmedieninhalte an verschiedenen datenschutzgesteuerten Komponenten entfernt, ersetzt oder ausgeblendet werden, und
- Zugreifen auf mindestens eine der Komponenten des Medienvektors auf der Grundlage der Datenschutz-Steuerungsinformationen, die angewendet werden, um mindestens eine der Komponenten des Medienvektors festzulegen, die einem Benutzer von Medieninhalten bereitgestellt werden dürfen.

5. Das Verfahren nach Anspruch 4, wobei der Zugriff auf mindestens eine der Komponenten umfasst:
- Senden einer Anforderung für mindestens eine der Komponenten,
- Empfangen eines signierten Tokens, der auf mindestens eine der Komponenten hinweist, die an den Benutzer von Medieninhalten gesendet werden dürfen,
- Senden des signierten Tokens an eine Entität, die den Zugriff auf den Medienvektor speichert und/oder steuert,
- Empfangen von mindestens einer der Komponenten aus der Entität, und
- Bewirken der Decodierung mindestens einer der Komponenten oder Senden mindestens einer der Komponenten an ein Media-Player-Gerät.

6. Das Verfahren nach Anspruch 4 oder 5, wobei die Anforderung für mindestens eine der Komponenten und/oder eine Nachricht an die Entität mit dem signierten Token durch einen privaten Schlüssel signiert ist, der mit dem Benutzer von Medieninhalten assoziiert ist, und/oder
mindestens eine der Komponenten des Medienvektors in verschlüsselter Form empfangen und mit einem privaten Schlüssel entschlüsselt wird, der mit dem Benutzer von Medieninhalten assoziiert ist.

7. Das Verfahren nach einem beliebigen der vorstehenden Ansprüche, wobei die Datenschutz-Steuerungsinformationen in einem Blockchain-Ledger als Reaktion auf die Validierung einer Blockchain-Transaktion mit den zugeordneten Datenschutz-Steuerungsinformationen gespeichert sind.

8. Das Verfahren nach einem beliebigen der vorstehenden Ansprüche, wobei ein Smart Contract den Zugriff auf den Medienvektor auf der Grundlage von zugeordneten Datenschutz-Steuerungsinformationen steuert und Token für überprüfte medieninhaltsanfordernde Entitäten ausstellt, wobei jeder Token auf Medienkomponenten hinweist, die einer medieninhaltsanfordernden Entität bereitgestellt werden dürfen.

9. Das Verfahren nach einem beliebigen der vorstehenden Ansprüche, wobei der Medienvektor die Quellmedieninhalte und eine Vielzahl von datenschutzgesteuerten Komponenten wie Schichten aufweist, wobei eine anonymisierte Basisschicht keine datenschutzsensiblen Elemente enthält und mindestens eine weitere datenschutzgesteuerte Schicht ein oder mehrere datenschutzsensible Elemente umfasst.

10. Das Verfahren nach einem beliebigen der vorstehenden Ansprüche, wobei die Datenschutz-Steuerungsinformationen für jede der Komponenten in einem Datenschutz-Array gespeichert sind, wobei das Datenschutz-Array einen Eintrag für jede Komponente und die Quellmedieninhalte aufweist, wobei der Eintrag aus einem Hash von assoziierten Medieninhalten und einem oder mehreren Datenschutz-Parameterabschnitten mit Parametern auf mindestens einer Einschränkung besteht, Speichern und Verwenden von Medieninhalten umfasst.

11. Eine Vorrichtung (10) mit:
- Mitteln zum Generieren, auf der Grundlage von Quellmedieninhalten, eines Medienvektors mit datenschutzgesteuerten Komponenten, wobei jede Komponente einer teilweise modifizierten Version der Quellmedieninhalte entspricht, sodass mindestens einige unterschiedliche datenschutzgesteuerte Bildmedieninhaltsteile der Quellmedieninhalte an verschiedenen datenschutzgesteuerten Komponenten entfernt, ersetzt oder ausgeblendet werden,
- Mitteln zum Zuordnen von Datenschutz-Steuerungsinformationen zu jeder Komponente, um unterschiedliche Stufen von datenschutzgesteuerten Bildmedieninhaltsteilen der Quellmedieninhalte für Präsentationszwecke zu erhalten, und
- Mitteln zum Bewirken, dass die Datenschutz-Steuerungsinformationen in einem Distributed Ledger gespeichert werden, um den Zugriff auf verschiedene Komponenten des Medienvektors zu steuern und mindestens eine der Komponenten des Medienvektors festzulegen, die einem Benutzer von Medieninhalten bereitgestellt werden dürfen.

12. Die Vorrichtung nach Anspruch 11, wobei die Vorrichtung Mittel zur Ausführung des Verfahrens nach einem der Ansprüche 2, 3 oder 7 bis 10 umfasst.

13. Eine Vorrichtung (30) mit:
- Mitteln zum Empfangen, durch ein Medieninhalts-Benutzergerät, von Datenschutz-Steuerungsinformationen, die in einem Distributed Ledger gespeichert sind, wobei die Datenschutz-Steuerungsinformationen mit einer oder mehreren datenschutzgesteuerten Komponenten eines Medienvektors assoziiert sind, um unterschiedliche Stufen von datenschutzgesteuerten Bildmedieninhaltsteilen von Quellmedieninhalten für Präsentationszwecke bereitzustellen, wobei jede datenschutzgesteuerte Komponente eine teilweise modifizierte Version der assoziierten Quellmedieninhalte darstellt, sodass mindestens einige unterschiedliche datenschutzgesteuerte Bildmedieninhaltsteile der Quellmedieninhalte an verschiedenen datenschutzgesteuerten Komponenten entfernt, ersetzt oder ausgeblendet werden, und
- Mitteln zum Zugreifen auf mindestens eine der Komponenten des Medienvektors auf der Grundlage der Datenschutz-Steuerungsinformationen, die angewendet werden, um mindestens eine der Komponenten des Medienvektors festzulegen, die einem Benutzer von Medieninhalten bereitgestellt werden dürfen.

14. Die Vorrichtung nach Anspruch 13, wobei die Vorrichtung Mittel zur Ausführung des Verfahrens nach einem der Ansprüche 5 bis 10 umfasst.

15. Ein Computerprogramm mit einem Satz von computerlesbaren Befehlen, die bei Ausführung durch mindestens einen Prozessor bewirken, dass eine Vorrichtung das Verfahren nach einem beliebigen der vorstehenden Ansprüche 1 bis 10 ausführt.

## Revendications

1. Procédé, comprenant :
- la génération, sur la base d'un contenu média source, d'un vecteur média comprenant des composants à confidentialité contrôlée, dans lequel chaque composant est une version partiellement modifiée du contenu média source de sorte qu'au moins certaines parties de contenu média visuel à confidentialité contrôlée différentes du contenu média source soient supprimées, remplacées ou masquées au niveau de différents composants à confidentialité contrôlée,
- l'assignation pour chacun des composants d'informations de contrôle de confidentialité pour fournir différents niveaux de parties de contenu média visuel à confidentialité contrôlée du contenu média source pour la présentation, et
- le fait d'amener les informations de contrôle de confidentialité à être stockées dans un registre distribué pour contrôler l'accès à différents composants du vecteur média et déterminer au moins un des composants du vecteur média autorisés à être fournis à un utilisateur de contenu média.

2. Procédé selon la revendication 1, dans lequel les informations de contrôle de confidentialité sont envoyées pour le stockage sous forme chiffrée à une base de données pour contrôler l'accès à un ou plusieurs des composants du vecteur média.

3. Procédé selon une quelconque revendication précédente, dans lequel le contenu média source comprend des données d'image,
les données d'image sont analysées pour détecter des éléments sensibles à la confidentialité,
des régions de données d'image comprenant des éléments sensibles à la confidentialité sont classées et se voient assigner des niveaux de confidentialité selon des préférences de propriétaire de contenu, et
des éléments sensibles à la confidentialité sont inclus ou évités dans les composants à confidentialité contrôlée sur la base des niveaux de confidentialité assignés.

4. Procédé, comprenant :
- la réception, par un appareil d'utilisateur de contenu média, d'informations de contrôle de confidentialité stockées dans un registre distribué, dans lequel les informations de contrôle de confidentialité sont associées à un ou plusieurs composants à confidentialité contrôlée d'un vecteur média pour fournir différents niveaux de parties de contenu média visuel à confidentialité contrôlée d'un contenu média source pour la présentation, chaque composant à confidentialité contrôlée représentant une version partiellement modifiée d'un contenu média source associé de sorte qu'au moins certaines parties de contenu média visuel à confidentialité contrôlée différentes du contenu média source soient supprimées, remplacées ou masquées au niveau de différents composants à confidentialité contrôlée, et
- l'accès à au moins un des composants du vecteur média sur la base des informations de contrôle de confidentialité appliquées pour déterminer au moins un des composants du vecteur média autorisés à être fournis à un utilisateur de contenu média.

5. Procédé selon la revendication 4, dans lequel l'accès à au moins un des composants comprend :
- l'envoi d'une demande pour au moins un des composants,
- la réception d'un jeton signé indiquant au moins un des composants qui sont autorisés à être délivrés à l'utilisateur de contenu média,
- l'envoi du jeton signé à une entité stockant et/ou contrôlant l'accès au vecteur média,
- la réception de l'au moins un des composants en provenance de l'entité, et
- le fait de provoquer le décodage de l'au moins un des composants ou l'envoi de l'au moins un des composants pour un dispositif lecteur média.

6. Procédé selon la revendication 4 ou 5, dans lequel la demande pour au moins un des composants et/ou un message à l'entité comprenant le jeton signé sont signés avec une clé privée associée à l'utilisateur de contenu média, et/ou
l'au moins un des composants du vecteur média est reçu sous forme chiffrée et déchiffrée avec une clé privée associée à l'utilisateur de contenu média.

7. Procédé selon une quelconque revendication précédente, dans lequel les informations de contrôle de confidentialité sont stockées dans un registre de chaînes de blocs en réponse à la validation d'une transaction de chaîne de blocs comprenant les informations de contrôle de confidentialité assignées.

8. Procédé selon une quelconque revendication précédente, dans lequel un contrat intelligent contrôle l'accès au vecteur média sur la base des informations de contrôle de confidentialité assignées et émet des jetons pour des entités demandeuses de contenu média vérifiées, chaque jeton indiquant des composants médias autorisés à être fournis à une entité demandeuse de contenu média.

9. Procédé selon une quelconque revendication précédente, dans lequel le vecteur média comprend le contenu média source et une pluralité de composants à confidentialité contrôlée en tant que couches, dans lequel une couche de base anonymisée ne comprend aucun élément sensible à la confidentialité, et au moins une autre couche à confidentialité contrôlée comprenant un ou plusieurs éléments sensibles à la confidentialité.

10. Procédé selon une quelconque revendication précédente, dans lequel les informations de contrôle de confidentialité pour chacun des composants sont stockées dans un tableau de confidentialité, dans lequel le tableau de confidentialité comprend une entrée pour chaque composant et le contenu média source, l'entrée comprenant un hachage d'un contenu média associé et une ou plusieurs portions de paramètres de confidentialité comprenant des paramètres sur au moins l'un parmi la restriction, le stockage, et l'utilisation d'un contenu média.

11. Appareil (10) comprenant :
- des moyens pour générer, sur la base d'un contenu média source, un vecteur média comprenant des composants à confidentialité contrôlée, dans lequel chaque composant est une version partiellement modifiée du contenu média source de sorte qu'au moins certaines parties de contenu média visuel à confidentialité contrôlée différentes du contenu média source soient supprimées, remplacées ou masquées au niveau de différents composants à confidentialité contrôlée,
- des moyens pour assigner pour chacun des composants des informations de contrôle de confidentialité pour fournir différents niveaux de parties de contenu média visuel à confidentialité contrôlée du contenu média source pour la présentation, et
- des moyens pour amener les informations de contrôle de confidentialité à être stockées dans un registre distribué pour contrôler l'accès à différents composants du vecteur média et déterminer au moins un des composants du vecteur média autorisés à être fournis à un utilisateur de contenu média.

12. Appareil selon la revendication 11, dans lequel l'appareil comprend des moyens pour effectuer le procédé selon l'une quelconque des revendications 2, 3 ou 7 à 10.

13. Appareil (30) comprenant :
- des moyens pour recevoir, par un appareil d'utilisateur de contenu média, des informations de contrôle de confidentialité stockées dans un registre distribué, dans lequel les informations de contrôle de confidentialité sont associées à un ou plusieurs composants à confidentialité contrôlée d'un vecteur média pour fournir différents niveaux de parties de contenu média visuel à confidentialité contrôlée d'un contenu média source pour la présentation, chaque composant à confidentialité contrôlée représentant une version partiellement modifiée d'un contenu média source associé de sorte qu'au moins certaines parties de contenu média visuel à confidentialité contrôlée différentes du contenu média source soient supprimées, remplacées ou masquées au niveau de différents composants à confidentialité contrôlée, et
- des moyens pour accéder à au moins un des composants du vecteur média sur la base des informations de contrôle de confidentialité appliquées pour déterminer au moins un des composants du vecteur média qui sont autorisés à être fournis à un utilisateur de contenu média.

14. Appareil selon la revendication 13, dans lequel l'appareil comprend des moyens pour effectuer le procédé selon l'une quelconque des revendications 5 à 10.

15. Programme informatique comprenant un ensemble d'instructions lisibles par ordinateur qui, lorsqu'elles sont exécutées par au moins un processeur, amènent un appareil à réaliser le procédé selon l'une quelconque des revendications 1 à 10.
